# EUROPEAN PATENT APPLICATION

(11) **EP 4 666 826 A1**
(43) Date of publication of application: **24.12.2025**
(21) Application number: 25164609.7
(22) Date of filing: 19.03.2025
(51) Int. Cl.: A01B 79/00, G06N 20/00, G06Q 10/06, G06Q 50/02

(54) **GRAPHICAL USER INTERFACES FOR TRACKED MOBILE MACHINE OPERATIONAL STATUSES AT INTERVALS OF TIME OF A TIME PERIOD**

(30) Priority: 20.06.2024 GB 202408913
(71) Applicant: AGCO International GmbH, 8212 Neuhausen am Rheinfall (CH)
(72) Inventor: LAUSDAHL, Kenneth, DK8900 Randers (DK); BECH, Søren, DK8900 Randers (DK); NILSSON, Rene, DK8900 Randers (DK); ZHOU, Kun, 8930 Randers (DK); LUND, Jens, DK8900 Randers (DK)
(74) Representative: AGCO Intellectual Property Department

(57) **Abstract**

Technologies for generating GUIs for tracked mobile machine operational statuses. In some embodiments, a method includes receiving, by a computing system (102, 200), machine operational status information (111a, 111b) of a mobile machine (110) that has moved through an area of land during a time period (step 302). The received machine status information (111a, 111b) including respective operational statuses of the machine (110) at each interval of intervals of time within the time period. The method also including generating, by the computing system (102, 200), a GUI (102d) according to the status information (111a, 111b) (step 304). The GUI (102d) including a calendar view (900) of the statuses. In some cases, the operational status information (111a) includes respective operational statuses of the machine at only some intervals within the time period. And, the statuses of the machine that are missing can be generated by a model (108) that is trained by the available statuses received by the system.

## Description

### TECHNICAL FIELD

The present disclosure relates to methods and systems for tracking mobile machine operational statuses and providing graphical user interfaces (GUIs) for the tracked statuses.

### BACKGROUND

Management decisions for a work site or field, such as in farming, construction, or forestry, requires robust note-taking. Ideally, notes are taken with information related to the landscape or property and that data is recorded with date and time information on various operations involved within the landscape or property. While there exist numerous ways to collect such information, it often adds an extra burden on the people involved as they need to make additional recordings of what is being carried out while controlling machines that do the work. Because multitasking is required and prone to human error, prior art systems can often lead to incomplete records of operations within the worksite or field. Such deficiencies can become significant and can occur on a minute, hourly, and daily basis. These additional tasks are skipped due to daily urgencies which often occur in a farming, construction, or forestry environment.

For example, in farming, mobile farming machines often operate on crop fields with only a high-level plan that fully relies on the operator to produce task reports for each field operation. Because the operator of the machine is preoccupied with making real-time decisions in the field, record-keeping is often missed or at least inconsistent. Overall, when such tracking is lacking or limited, the knowledge base for the worksite is only partial, and important constraints, such as field efficiency, crop phase handling, and machine utilization become hard to judge and plan for. Often, there are multiple pains for farmers when trying to remember what is happening and what happened throughout the year. With the current tracking tools, the farmer and the workers must be extremely diligent in remembering to manually document the operations and assignments, or they must install additional hardware on their machines that can be costly. Either way, sparse data for the fields and operations throughout the year is commonplace, and accurate insight into the farm's statuses and operations is often lost or disappointing.

It is known to automate record keeping for a work site or field to some extent. And, some prior art systems are known to ease the multi-talking of mobile machine operators controlling machines at work. However, such prior art automation technology often still relies on significant manual tasks by operators and many gaps in datasets occur. Predictions are known to be made using various forms of computing techniques, such as using supervised learning to reduce voids in information trails. And, such information for the supervised learning or other computing techniques can be retrieved via imaging and other types of outputs common to sensors and control systems. However, there is much room for improvement in such tracking and data recording systems, especially when it comes to gap filling in large sets of data for a work site or field.

Also, filing such gaps can depend on analyzing complex interactions of various variables within the worksite or field. Known prior art may overly depend on operations tracking via manual means, expert knowledge, and simple computations (e.g., heuristic algorithms) performed by computing systems. However, such tracking of operations data does not always consider the complex interactions between various factors, such as terrain, ground conditions, soil type, weather conditions, and machinery capabilities. And, when such systems consider the complexities, the gap filling in records may not be as accurate as needed. Also, with complex interactions being ignored, the complete recording of operations can become subpar. Either way, known systems often output lackluster operations datasets which ultimately lead to higher operational costs and reduced productivity. Thus, it would be advantageous to provide a system (and associated method) that overcomes or at least mitigates one or more problems associated with the prior art systems and considers complex interactions between various factors in filing gaps in records and the complete tracking of mobile machine operations at a worksite or field.

### SUMMARY

Described herein are techniques for tracking mobile machine operational statuses at intervals of time of a time period and providing graphical user interfaces (GUIs) for the tracked statuses. The mobile machines can be or include mobile agricultural machines, mobile construction machines, mobile forestry machines, or mobile landscaping machines, for example. The techniques disclosed herein provide specific technical solutions to at least overcome the technical problems mentioned in the background section or other parts of the application as well as other technical problems not described herein but recognized by those skilled in the art.

In some embodiments, the techniques include technologies that track mobile machine operational statuses at intervals of time of a time period and provide GUIs for the tracked statuses. With respect to some embodiments, disclosed herein are computerized methods for tracking mobile machine operational statuses and providing GUIs for the tracked statuses, as well as a non-transitory computer-readable storage medium for carrying out technical operations of the computerized methods. The non-transitory computer-readable storage medium has tangibly stored thereon, or tangibly encoded thereon, computer-readable instructions that when executed by one or more devices (e.g., one or more personal computers or servers) cause at least one processor to perform a method for improved systems and methods for the tracking of mobile machine operational statuses and providing GUIs for the tracked statuses.

In some cases, the technologies use a machine learning or deep learning based model to assist in the tracking of mobile machine operational statuses at intervals of time of a time period. Also, in some examples, the technologies described herein can leverage another type of model that is not trained via machine learning or deep learning, such as a predetermined and static rules-based model for tracking mobile machine operational statuses at intervals of time of a time period. Furthermore, in some examples, the technologies described herein can use a model that is trained or frequently updated by a computing technique or other type of technique other than machine learning or deep learning, such as a dynamic rules-based model for tracking mobile machine operational statuses at intervals of time of a time period.

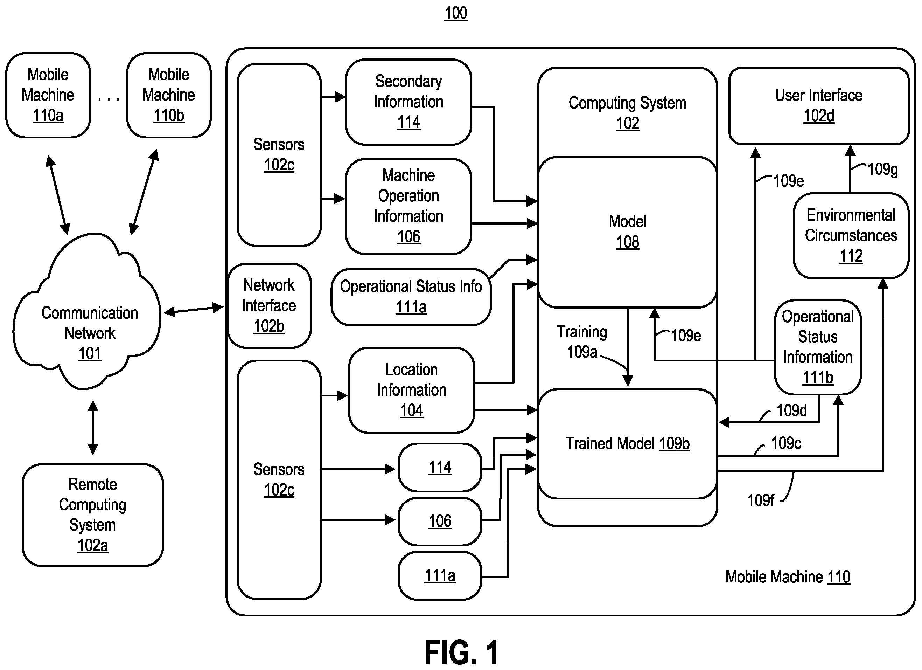

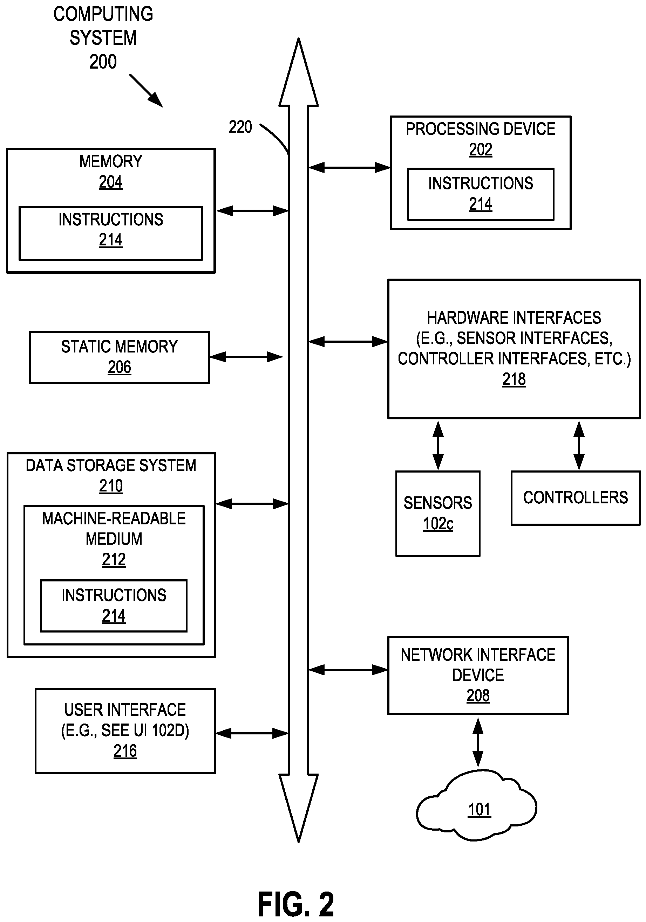

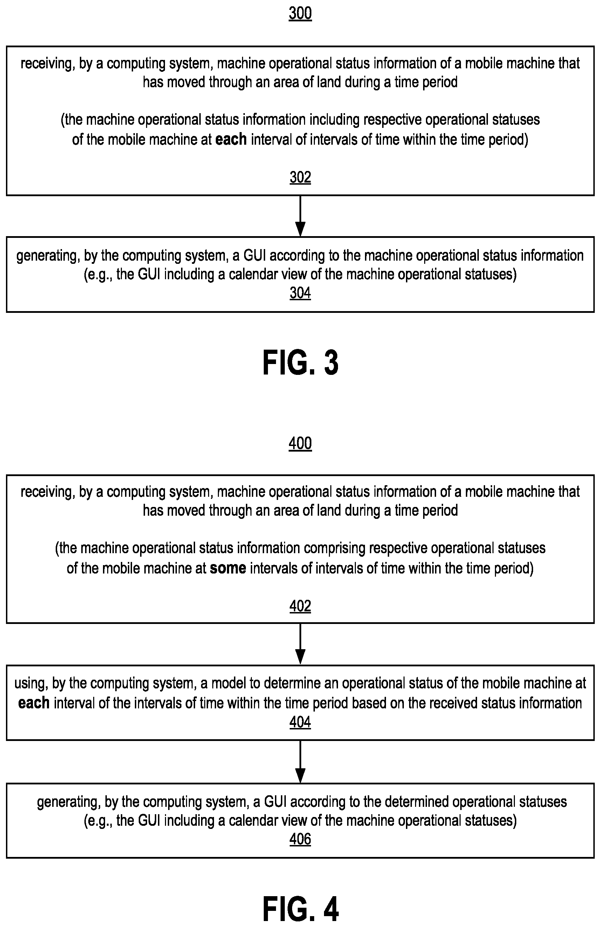

Some embodiments include a method for tracking mobile machine operational statuses at intervals of time of a time period and providing GUIs for the tracked statuses. In some examples, the method includes receiving, by a computing system (e.g., see computing system 102 shown in FIG. 1 or computing system 200 shown in FIG. 2), machine operational status information (e.g., see status information 111a or status information 111b shown in FIG. 1) of a mobile machine (e.g., see mobile machine 110 shown in FIG. 1) that has moved through an area of land during a time period (e.g., see step 402 of method 400 shown in FIG. 4). The received machine operational status information includes respective operational statuses of the mobile machine at some intervals of intervals of time within the time period. The mobile machine includes an implement used for farming, construction, or forestry. The method also includes using, by the computing system, a model (e.g., see model 108 shown in FIG. 1) to determine an operational status (e.g., see status information 111b) of the mobile machine at each interval of the intervals of time within the time period based on the received machine operational status information (e.g., see status information 111a shown in FIG. 1 and step 404 of method 400 shown in FIG. 4). The method also includes generating, by the computing system, a graphical user interface (GUI) (e.g., see user interface 111b shown in FIG. 1) according to the determined machine operational statuses (e.g., see status information 111b shown in FIG. 1 and step 406 of method 400 shown in FIG. 4).

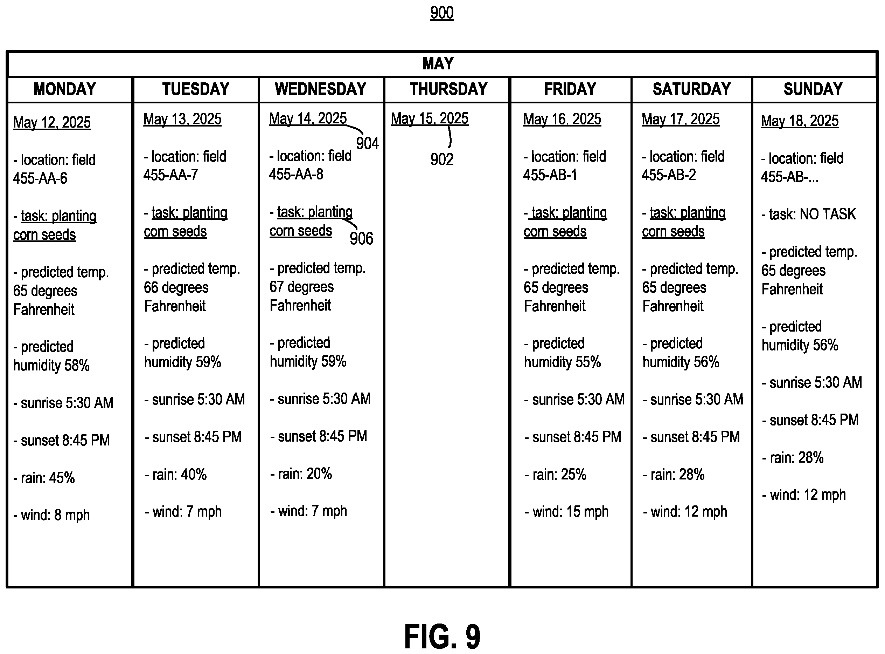

In some embodiments, the GUI (e.g., see user interface 102d) includes a chronological view of events, such as a calendar view (e.g., see calendar view 900 shown in FIG. 9), of the determined machine operational statuses. In some examples, graphical representations of the dates within the view are expandable (e.g., see expandable date 902 shown in FIG. 9) to show the respective determined operational statuses (e.g., see status information 111b) and collapsible (e.g., see collapsible date 904 shown in FIG. 9) to hide the determined statuses.

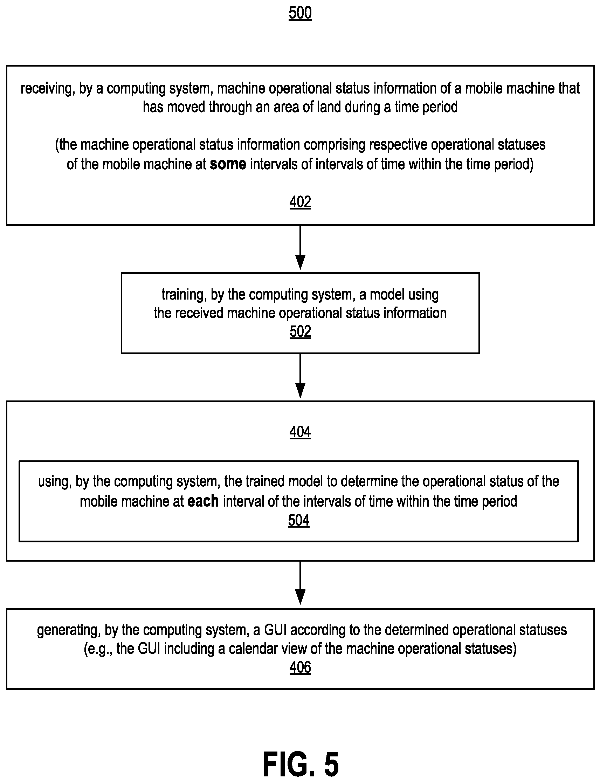

In some embodiments, the method further includes training, by the computing system, the model (e.g., see model 108) using the received machine operational status information (e.g., see status information 111a and 111b shown in FIG. 1 and step 502 of method 500 shown in FIG. 5). And, in such cases, the method also includes using, by the computing system, the trained model (e.g., see trained model 109b) to determine an operational status (e.g., see status information 111b) of the mobile machine at each interval of the intervals of time within the time period (e.g., see step 504 of method 500 shown in FIG. 5).

In some embodiments, the determined operational status (e.g., see status information 111b) at each interval of time of the time period includes a location of the mobile machine in the area of land at the interval of time.

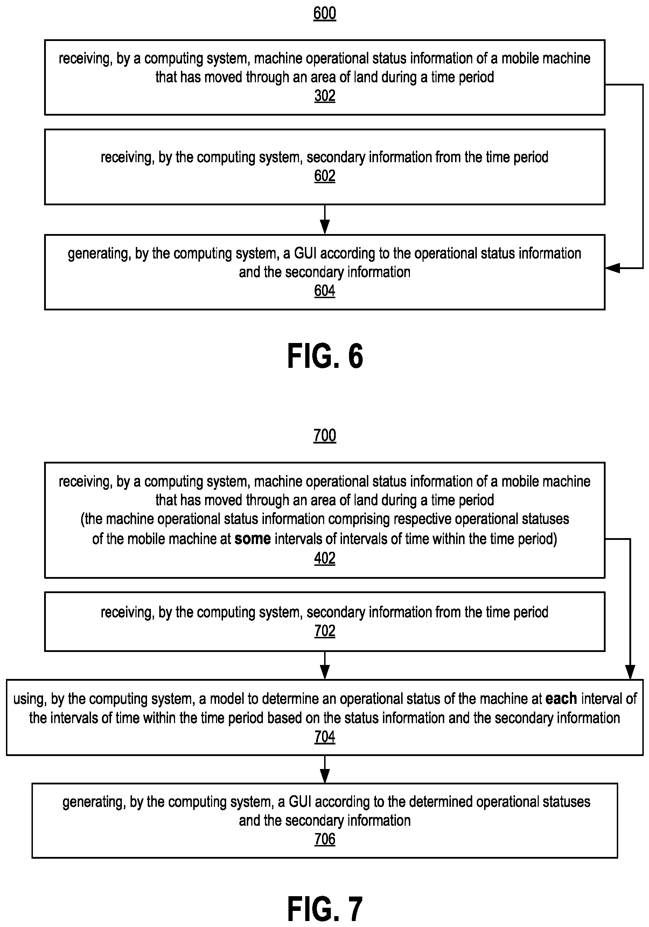

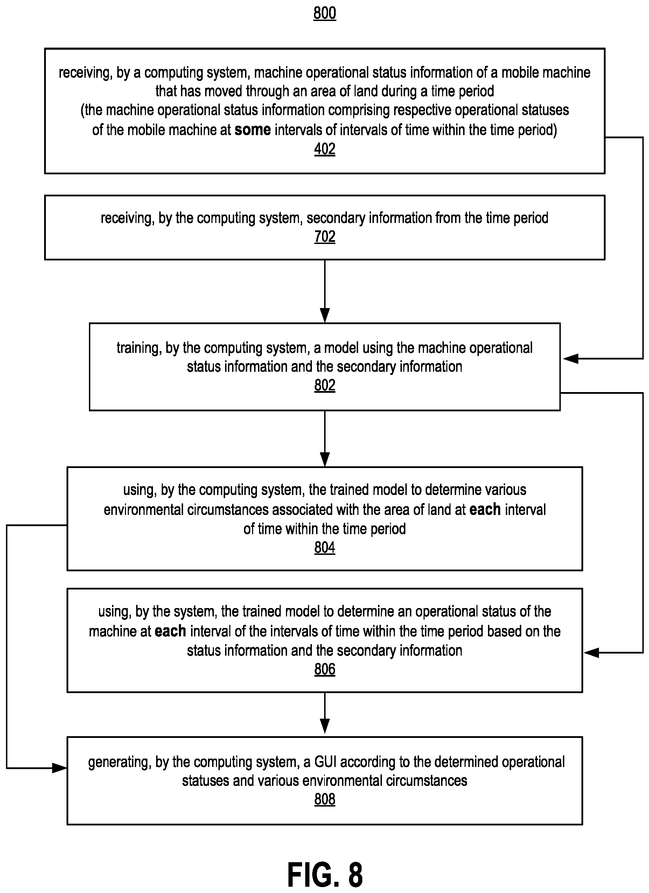

In some embodiments, the method further includes receiving, by the computing system, secondary information (e.g., see secondary information 114 shown in FIG. 1) from the time period and associated with the area of land (e.g., see step 702 of method 700 shown in FIG. 7). And, in such cases, the method also includes using, by the computing system, a model (e.g., see model 108) to determine the operational status (e.g., see status information 111b) of the mobile machine at each interval of the intervals of time within the time period further based on the received secondary information (e.g., see step 704 of method 700 shown in FIG. 7). In some examples, the secondary information includes environmental factors associated with the area of land. In some examples, the method further includes training, by the computing system, the model (e.g., see model 108) using the received secondary information. In some examples, the method further includes training, by the computing system, the model (e.g., see model 108) using the received secondary information (e.g., see step 802 of method 800 shown in FIG. 8). And, in such cases, the method can further include using, by the computing system, the trained model (e.g., see trained model 109b) to determine various environmental circumstances (e.g., see environmental circumstances 112) associated with the area of land at each interval of time within the time period (e.g., see step 804 of method 800). In some examples, the method further includes generating, by the computing system, an enhanced GUI (e.g., see user interface 102d) according to the determined machine operational statuses (e.g., see status information 111b) and the various environmental circumstances (e.g., see step 808 of the method 800). In some cases, the GUI includes a calendar view (e.g., see calendar view 900) of the enhanced machine operational statuses and the various environmental circumstances. In some examples, the secondary information (e.g., see secondary information 114) is derived from satellite image data.

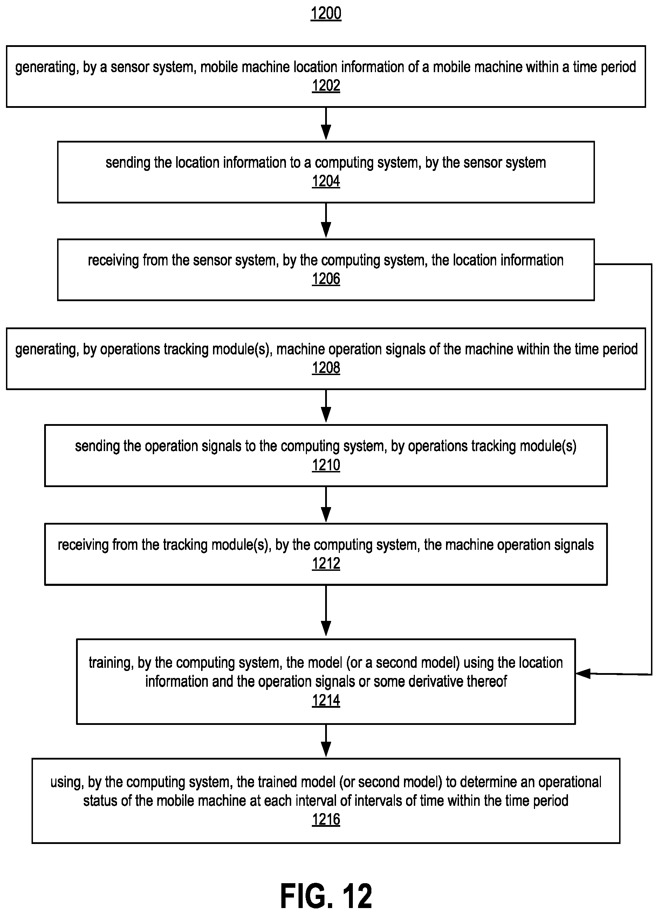

In some embodiments, the method further includes receiving, by the computing system, mobile machine location information (e.g., see location information 104 shown in FIG. 1 and step 1206 of method 1200 shown in FIG. 12). The mobile machine location information can include a series of time-stamped locations of a mobile machine as it moves through the area of land during the time period. The method can also further include further training, by the computing system, the model (e.g., see model 108) using the series of time-stamped locations (e.g., see step 1214 of method 1200). And, the method can also include using, by the computing system, the further trained model (e.g., see trained model 109b) to determine the operational status (e.g., see status 111b) of the mobile machine at each interval of the intervals of time within the time period (e.g., see step 1216 of method 1200). Also, the method can include receiving, by the computing system, machine operation signals (e.g., see operation information 106 shown in FIG. 1 and the step1212 of method 1200). The machine operation signals including machine operations data related to operations of the mobile machine during the time period. The method can also include even further training, by the computing system, the model (e.g., see model 108) using the received machine operation signals (e.g., see step 1214). And, the method can include using, by the computing system, the even further trained model (e.g., see trained model 109b) to determine the operational status (e.g., see status 111b) of the mobile machine at each interval of the intervals of time within the time period (e.g., see step 1216). In some examples, each time-stamped location of the series of time-stamped locations includes a time stamp and a geographic location within the area of land.

Some embodiments include a method for merely receiving already tracked mobile machine operational statuses at intervals of time of a time period and providing GUIs for the already tracked statuses. In some examples, the method includes receiving, by a computing system (e.g., see computing systems 102 and 200 shown in FIGS. 1 and 2 respectively), machine operational status information (e.g., see status information 111a, 111b shown in FIG. 1) of a mobile machine (e.g., see mobile machine 110) that has moved through an area of land during a time period (e.g., see step 302 of method 300 shown in FIG. 3). The received machine operational status information includes respective operational statuses of the mobile machine at each interval of intervals of time within the time period. The mobile machine includes an implement used for farming, construction, or forestry. Such a method also includes generating, by the computing system, a GUI (e.g., see user interface 102d shown in FIG. 1) according to the received machine operational status information (e.g., see step 304 of method 300). And, in some cases, the GUI includes a calendar view (e.g., see calendar view 900 shown in FIG. 9) of the machine operational statuses. In some cases, the operational status at each interval of time of the time period includes a location of the mobile machine in the area of land at the interval of time. Also, such a method can also include receiving, by the computing system, secondary information (e.g., see secondary information 114) from the time period and associated with the area of land (e.g., see step 602 of method 600 shown in FIG. 6). The operational status at each interval of time of the time period includes a part of the secondary information associated with the location of the mobile machine in the area of land at the interval of time. The method can also include generating, by the computing system, the GUI according to the received secondary information (e.g., see step 604 of method 600). The GUI can include a calendar view of the machine operational statuses.

Some embodiments include a method for tracking farming machine operational statuses at intervals of time of a time period and providing GUIs for the tracked statuses. In some examples, the method includes receiving, by a computing system (e.g., see computing systems 102 and 200 shown in FIGS. 1 and 2 respectively), machine operational status information (e.g., see status information 111a and 111b shown in FIG. 1) of a mobile farming machine that has moved through an area of land during a time period (e.g., see step 302 of method 300 shown in FIG. 3). The received machine operational status information including respective operational statuses of the mobile machine at each interval of intervals of time within the time period. The method also includes generating, by the computing system, a GUI (e.g., see user interface 102d) according to the received machine operational status information (e.g., see step 304 of method 300). The GUI can include a calendar view (e.g., see view 900 shown in FIG. 9) of the machine operational statuses. In some cases, the operational status at each interval of time of the time period includes a location of the mobile machine in the area of land at the interval of time.

These and other important aspects of the invention are described more fully in the detailed description below. The invention is not limited to the particular methods and systems described herein. Other embodiments can be used and changes to the described embodiments can be made without departing from the scope of the claims that follow the detailed description. Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various example embodiments of the disclosure.
FIG. 1 illustrates an example technical solution to the example technical problems described herein, in accordance with some embodiments of the present disclosure.
FIG. 2 illustrates a block diagram of example aspects of a computing system, in accordance with some embodiments of the present disclosure.
FIGS. 3 to 8 and 12 to 16 illustrate methods in accordance with some embodiments of the present disclosure.
FIGS. 9 to 11 illustrate examples views of an example GUI, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications, and equivalents as will become apparent from consideration of the following detailed description and other parts of this disclosure.

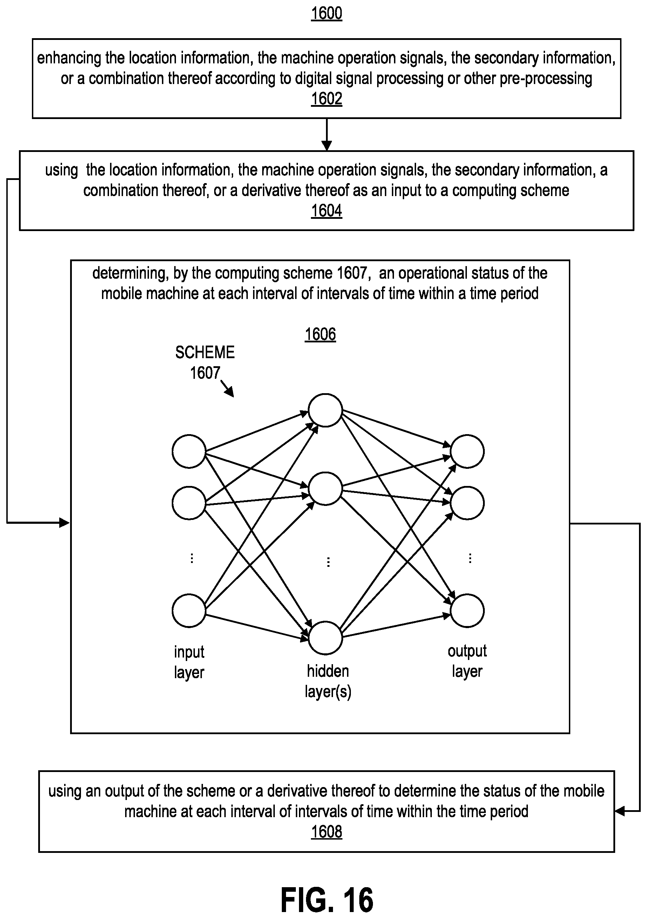

Described herein are techniques for tracking mobile machine operational statuses at intervals of time of a time period and providing graphical user interfaces (GUIs) for the tracked statuses (e.g., see the views of an example GUI shown in FIGS. 9 to 11). The mobile machines (e.g., see mobile machines 110, 110a, and 110b shown in FIG. 1) can be or include mobile agricultural machines, mobile construction machines, mobile forestry machines, or mobile landscaping machines, for example. The techniques disclosed herein provide specific technical solutions to at least overcome the technical problems mentioned in the background section or other parts of the application as well as other technical problems not described herein but recognized by those skilled in the art. In some embodiments, the techniques include technologies that use machine learning or deep learning (e.g., see method 1600 shown in FIG. 16) to track mobile machine operational statuses at intervals of time of a time period. And, in some cases, the output of the technologies can be a basis for generating and providing the GUIs.

Embodiments include technologies for generating GUIs for tracked mobile machine operational statuses. In some embodiments, a method includes receiving, by a computing system (e.g., see computing systems 102 and 200 shown in FIGS. 1 and 2 respectively), machine operational status information (e.g., see status information 111a and 111b shown in FIG. 1) of a mobile machine (e.g., see mobile machine 110) that has moved through an area of land during a time period (e.g., see step 302 of method 300 shown in FIG. 3). The received machine status information including respective operational statuses of the machine at each interval of intervals of time within the time period. The method also including generating, by the computing system, a GUI (e.g., see user interface 102d) according to the received status information (e.g., see step 304 of method 300). In some cases, the GUI (e.g., see user interface 102d) includes a chronological view of events, such as a calendar view (e.g., see calendar view 900 shown in FIG. 9), of the determined machine operational statuses.

In some cases, the operational status information includes respective operational statuses of the machine at only some intervals within the time period. And, the statuses of the machine that are missing can be generated by a model (e.g., see model 108 shown in FIG. 1) that is trained by the available statuses received by the system.

In some embodiments, the computing system (e.g., see computing systems 102 and 200) uses machine or deep learning to determine the field boundaries, predict the operation carried out on the field, and find obstacles in the field. This helps create a complete data set for the operations and the farm and can give better insight into the status of the farm or worksite and for various operations. For example, farmers can fix faulty predictions, and then the fixes can be used for training and improvement on models to enhance the predictions of such models. In some cases, the system can use telemetry data (such as latitude, longitude, speed, torque, RPM, hydraulic information, timestamps, etc.), weather data, and geographical information (e.g., the position of roads, lakes, power poles, etc.) to summarize operations in a worksite or field. This is beneficial to build a detailed view of the season, not only regarding the machine operations but also considering the environmental conditions. Also, by using the coordinates of the mobile machines, the system can distinguish the fields by the density of driving, and using satellite photos and computer vision to refine the determinations. This gives the output of the model a geometric slice for which to make aggregates regarding yield, fuel usage, etc. Further, with task data labeled each trip from entry on the field or worksite until exit can be assessed for which operation took place and other factors (such as how many mobile machines were used, speed of the machines, and time of the year, etc.). Using such information and much more as well as models (whether trained or not), the computing system can generate useful views for mobile machine operations. For example, the system can generate a calendar view for a specified area describing what the machines have performed, where they did it, and how, without the need for manual input. Also, for example, the system can produce a calendar view, such as via a trained model, including an AI-generated plan for a specified area describing the planned tasks for the machines, the locations of the tasks, and timing of the tasks.

The techniques disclosed herein can resolve many problems stemming from partial machine operations data often due to lack of operator consistency in recording operations or field or worksite conditions during planned and unplanned tasks. The technologies, in some embodiments, can use time-stamped machine locations or another form of time tracing the location of mobile machine locations, such as another form of annotation of machine signals and other operations information such as location of the machine. As a result, the techniques are effective at tracking mobile machine operational statuses at intervals of time of a time period. In some examples, data is separated into two categories such as fieldwork and others. The fieldwork is then further analyzed to find time spans that include operations within a field area. The time series data can then be further analyzed to determine the type of operations represented by the data. Annotations can occur that address the operations with a machine's primary role as well as secondary tasks. In some embodiments, the operation status or type detection occurs by correlating two or more of the following parameters of the time traced data: mobile machine location, weather at the location (such as wind speed, wind direction, temperature, humidity, etc.), or imaging of the worksite or field (such as via satellite-based image capturing data for use by the Normalized Difference Vegetation Index (NDVI)), and sensed machine operations and conditions (such as engine load, oil pressure or temperature, torque, speed, etc.). In some examples, the weather data, for the given period, is collected from either a local weather station, close to the given area, or by a more national weather service. By retrieving the weather data, the time of the year, and the positioning of the machine, a good suggestion of the operation type or status can be made. Also, in some examples, with the addition of satellite or drone images (such as for use by NDVI), a prediction of the crop state can be made, which can assist in narrowing the type of field operation or the status of it. For example, if the NDVI can show that there is no vegetation in a field, then it may be concluded that the operation is not a spraying operation. By also collecting information from the mobile machine, the technologies can further narrow the operations or status of such operations. For example, by using the data from the engine and comparing it with the speed of the mobile machine, an estimation of the engine load can be made. The load can, for example, assist in eliminating some operations or statuses, e.g., a certain high engine load could be linked to plowing or spreading slurry.

Overall, the techniques disclosed herein can help an operator (such as a farmer) procure a better and more well-rounded overview of operations at a worksite or field, and thereby help the operator make better decisions. Also, the technologies could be used to analyze operations to determine other factors and provide a holistic view of the field operations or work site. And, providing metrics of all operations per field or worksite can be useful in the development or generation of useful GUIs that display a holistic view of the field operations or worksite.

In some examples, the technologies described herein can use a machine learning or deep learning based model to assist in the tracking of mobile machine operational statuses at intervals of time of a time period. Or, in some examples, the technologies described herein can leverage another type of model that is not trained via machine learning or deep learning, such as a predetermined and static rules-based model for tracking mobile machine operational statuses at intervals of time of a time period. Also, in some examples, the technologies described herein can use a model that is trained or frequently updated by a computing technique or other type of technique other than machine learning or deep learning, such as a dynamic rules-based model for tracking mobile machine operational statuses at intervals of time of a time period.

In some embodiments, a computing scheme (such as a trained model) can be used in determining operation types or statuses. In some cases, an artificial neural network (ANN) can even be used for such determinations. For example, the technologies described herein can leverage advancements in artificial intelligence (AI), machine learning, and deep learning, which makes it possible to develop more sophisticated models for tracking mobile machine operational statuses at intervals of time of a time period. Such models can use a multitude of factors as inputs and enhance the tracking of mobile machine operational statuses from tracking such statuses by the prior art. The technologies can use deep learning models, based on Recurrent Neural Networks (RNNs) or Long Short-Term Memory (LSTM) networks, for example, or Transformer-based models. Such models can be used to track mobile machine operational statuses that consider many factors related to the statuses, such as tracking machine statuses in various farming, construction, forestry, and landscaping applications. Combined with GPS technology and the increasing digitization of mobile machinery, large amounts of data have become collectible to facilitate the creation and training of such models. The collected data can be used to train deep learning models, allowing them to learn complex patterns and dependencies between a multitude of factors and complex interactions between various factors, such as terrain, ground conditions, soil type, weather conditions, and machinery capabilities.

Also, in some cases, the models described herein can generate information for the production of useful GUIs that take into consideration various efficiencies and factors such as operational time efficiency, fuel efficiency, reduced soil compaction, and machine capabilities. The application of deep learning-based tracked machine statuses in agricultural, construction, forestry, landscaping, and other settings has the potential to revolutionize the way corresponding businesses operate. By leveraging AI, machine learning, and deep learning to track such machine statuses and even control mobile machines accordingly, operators of mobile machines can reduce costs, improve efficiency, and minimize the environmental impact of their operations.

FIG. 1 illustrates an example technical solution to the example technical problems described herein. The technical solution, shown in FIG. 1, can include or be a part of the techniques and technologies described herein (such as any one of the methods 300 to 800 and 1200 to 1600 shown in FIGS. 3 to 8 and 12 to 16 respectively) and can provide specific technical solutions to at least overcome the technical problems mentioned in the background section or other parts of the application as well as other technical problems not described herein but recognized by those skilled in the art. FIG. 1 depicts a network 100, such as a computer network, within which a computing system 102 receives various inputs (e.g., see location information 104, mobile machine operation information 106, operational status information 111a, operational status information 111b (which includes feedback and can include complete sets of the status information), and secondary information 114). These inputs and others can be received from other computing systems within the network 100 (e.g., see remote computing system 102a) via a communications network 101.

The network 100 has multiple mobile machines that can communicate with remote computing systems through the communications network 101 (e.g., see the mobile machines 110, 110a, and 110b, and the computing systems 102 and 102a). Specifically, FIG. 1 illustrates the network 100 including a remote computing system 102a, the communications network 101, and mobile machines (e.g., see machines 110, 110a, and 110b). The remote computing system (e.g., see remote computing system 102a) is remote in that it is physically and geographically separated from the mobile machines of the network 100. It should also be understood that the remote computing system 102a can embody multiple remote computing systems. The mobile machines are shown communicating with the remote computing system 102a of the network 100 through a communications network 101. As shown in FIG. 1, the mobile machines of the network 100 can each include its own computing system including electronics such as connected sensors, cameras, busses, and computers (e.g., see computing system 102, network interface 102b, sensors 102c, and user interface 102d). A computing system of a mobile machine can include a processor, memory, a communication interface and one or more sensors that can make the mobile machines individual computing devices. In the case of the communications network 101 including the Internet, the mobile machines of the network 100 are considered Internet of Things (IoT) devices. Also, in some embodiments, the remote computing system 102a is a part of a cloud computing system.

Specifically, the computing system 102 includes or is connected to electronics such as one or more user interfaces or UIs (e.g., see user interface 102d), sensors (e.g., see sensors 102c), busses, computers, and network interfaces (e.g., see network interface 102b). The computing system 102 includes at least a processor, memory, and a communication interface and can include one or more sensors, which can make the mobile machine 110 an individual computing device. In the case of the network 101 including the Internet, the mobile machine 110 can be considered an Internet of Things (IoT) device. Also, in some embodiments, the computing system 102 is a part of a cloud computing system. The computing system 102 and the mobile machine 110 can include both electronic hardware and software that can integrate between the systems of the computing system and the mobile machine 110. And, such hardware and software (such as UIs and sensors and other types of electrical and/or mechanical devices) can be configured to a communicate with a remote computing system via the communications network 101.

In some embodiments, where the mobile machines are agricultural machines (e.g., see machines 110, 110a, and 110b), at least one of the machines can include or be a combine harvester, a tractor, a planter, a sprayer, a baler, etc. In some embodiments, where a mobile machine is a construction machine, it can include or be an excavator, a compaction machine (such as one with rollers), a loader, a bulldozer, a skid steer machine, a grader, etc. In some embodiments, where a mobile machine is a forestry or landscaping machine, it can include or be a delimber, a feller buncher, a stump grinder, a mulcher, a yarder, a forwarder, a log loader, a harvester, a mower, etc. In some embodiments, a mobile machine can be or include a vehicle in that it is self-propelling. Also, in some embodiments, the mobile machine can be a part of a group of similar machines or a group of different types of mobile machines.

The network 101 can include one or more local area networks (LAN(s)) and/or one or more wide area networks (WAN(s)). In some embodiments, the network 101 includes the Internet and/or any other type of interconnected communications network. The network 101 can also include a single computer network or a telecommunications network. More specifically, in some embodiments, the network 101 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each computing component of the network 101 (including computing systems 102 and 102a) can be or include a computing system that includes memory that includes media. The media includes or is volatile memory components, non-volatile memory components, or a combination thereof. In general, in some embodiments, each of the computing systems includes a host system that uses memory. For example, the host system writes data to the memory and reads data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

The various inputs include or are related to some of the efficiencies and factors (such as operational time efficiency, fuel efficiency, reduced soil compaction, and machine capabilities) that are considered by the computing system in the determination of operational statuses of the mobile machines (e.g., see operational status information 111b). As shown, the computing system 102 includes a model 108 that is trained through various machine learning and deep learning techniques (e.g., see training 109a), and the result of the training provides a trained model 109b. Once the model is trained (e.g., see trained model 109b), it can be used to generate new operational status information 111b. Also, as shown, the computing system 102 is a part of a mobile machine 110 as are the inputs and outputs of the computing system (including the inputs of the deep learning model 108 and the trained model 109b--e.g., see information 104, 106, 111a, 111b, and 114 and inputs 109d and 109e--, the outputs of the trained model 109b, including outputs 109c and 109f, and the inputs 109e and 109g of user interface 102d). In some embodiments, the computing system 102 and the inputs and outputs of the computing system are part of a remote system in that the remote system is physically and geographically separated from the mobile machine 110 but communicates with a system or a UI of the machine over a telecommunications or computer network (e.g., see remote computing system 102a and network 101). The mobile machine 110 can be or include an agricultural machine, a construction machine, a forestry machine, a landscaping machine, or some other type of mobile machine, or some combination thereof, and the mobile machine can include a local computing system (e.g., see computing system 102).

In some examples, the mobile machine location information 104 includes a series of time-stamped locations of the mobile machine 110 as it moves through an area of land during a time period. As shown, the location information 104 is received from some of the sensors 102c. In some embodiments, the linking of the geographic location (e.g., GPS coordinates) of the mobile machine 110 to a date and time (such as via a timestamp) includes geotagging the date and time or the time stamp. Such tagging can include adding geographical identification metadata to an item including the image or a file of data that has date and time information associated with it. In some embodiments, the metadata can be embedded in the image or the item. And, in some embodiments, the metadata is stored separately and linked to the image or the item. The item can be a data log, a control system or sensor output signal, an image file, an image stream, an image object, etc. Also, in some embodiments, the item is a data log, a control system or sensor output signal, an image file or a video file, a media feed, a message file, or another type of item that is configurable to include a time and date information such as a timestamp and that can be geotagged. And, in some embodiments, the metadata related to the geotag includes latitude and longitude coordinates, altitude, bearing, distance, accuracy data, a place name, and/or a time stamp.

In some embodiments, the computing system 102 can link the mobile machine location information 104 to the other types of information of the system (e.g., machine operation information 106, operational status information 111a, and secondary information 114) via identifiers of parts of the information, which can become a part of the metadata before or after being linked to the location information 104. This makes the geotagging advanced geotagging.

In some embodiments, a location tracking system configured to retrieve at least part of the location information 104 (e.g., which can be one or more of the sensors 102c) includes a GPS or is a part of a GPS. In some embodiments, a camera is attached to the mobile machine and the camera can record information about or near the machine such as some of the machine operation information 106, the operational status information 111a, and the secondary information 114; and, the location tracking system can geotag the information 106, 111a, and 114.

In some examples, the machine operation information 106 includes machine operation signals of the mobile machine 110 that include machine operations data related to operations of the mobile machine during a time period. As shown, the machine operation information 106 is received from some of the sensors 102c. The machine operation information 106 can relate to implement positions or heights. In some embodiments, the machine operation information 106 can include one or more of the implement or actuator operation speeds or rates. In some embodiments, machine operation information 106 can include one or more of dispensing rates, evacuation rates, flow rates, spray rates, seeding rates, or some combination thereof. In some embodiments, the machine operation information 106 includes one or more of mobile machine default ground speeds, mobile machine maximum ground speeds, mobile machine minimum ground speeds, or some combination thereof. In some embodiments, the machine operation information 106 includes one or more of default hydraulic pressures, maximum hydraulic pressures, or minimum hydraulic pressures, or one or more of default operating temperatures or pressures, maximum operating temperatures or pressures, or minimum operating temperatures or pressures, or some combination thereof.

Depending on the embodiment, an implement can include one or more of any hydromechanical or electromechanical work tools such as augers, backhoes, bale spears, brooms, bulldozer blades, clamshell buckets, cold planes, demolition shears, equipment buckets, excavator buckets, forks, grapples, hammers, hoe rams, tilting buckets (such as 4-in-1 buckets), landscape tillers, material handling arms, mechanical pulverizers, crushers, multi-processors, pavement removal buckets, pile drivers, power take-offs, quick couplers, rakes, rippers, rotating grabs, compactors, skeleton buckets, snow blowers, stump grinders, stump shears, thumbs, tiltrotators, trenchers, vibratory plate compactors, wheel saws. Or, depending on the embodiment, an implement can include one or more of farming implements such as implements that till the ground (e.g., plows, offset discs, chisels, etc.), plant seeds, or transplant seedlings (e.g., seeders, planters, transplanters, etc.), harvest crops (e.g., reapers, threshers, gatherers, winnowers, or combines), bale, or perform other farming tasks such as spraying crops (e.g., sprayers). Or, depending on the embodiment, an implement can include one or more of forestry or landscaping implements such as axes, saws, mowers, or implements for tree planting or afforestation, mensuration, fire suppression, or logging or for other forestry or landscaping functions or tasks.

In some examples, the operational status information 111b includes the operational status of the mobile machine 110 at each interval of intervals of time within a time period. As shown, the operational status information 111b is an output of the trained model 109b and can be an input for the UI 102d to display a GUI providing an operational status of the mobile machine 110 at each interval of the intervals of time within the time period. In some examples, the status information 111b includes the type of work being done by the machine or the type of machine doing work in the field or work site. The operations status information 111a can include similar information to operations status information 111a; however, the operational status information 111b includes operational status of the mobile machine 110 at each interval within the given time period, whereas the operational status information 111a includes operational status of the mobile machine 110 at only some of the intervals within the given time period. In other words, operational status information 111a includes an incomplete set of data relative to each interval of the intervals of time within the given time period. On the other hand, the operational status information 111b provides a complete data set with respect to each interval of the intervals of time within the given time period.

In some embodiments, the status information 111b can be used as input for a UI of the mobile machine 110 so that machine operators can plan, manage, or control operations of the machine according to the information provided through the UI (e.g., see user interface 102d). The status information 111b or derivatives thereof (such as derived settings of the machine) can include implement positions. In some embodiments, the status information 111b or derivatives thereof (such as derived settings of the machine) can include implement heights. Again, the operations status information 111a can include similar information to operations status information 111a; however, the operational status information 111b includes operational status of the mobile machine 110 at each interval within the given time period, whereas the operational status information 111a includes operational status of the mobile machine 110 at only some of the intervals within the given time period.

In some embodiments, the status information 111b or derivatives thereof (such as derived settings of the machine) can include one or more of implement or actuator operation speeds or rates. In some embodiments, the status information 111b or derivatives thereof can include one or more of dispensing rates, evacuation rates, flow rates, spray rates, seeding rates, or some combination thereof. In some embodiments, the status information 111b or derivatives thereof include one or more of mobile machine default ground speeds, mobile machine maximum ground speeds, mobile machine minimum ground speeds, or some combination thereof. In some embodiments, the status information 111b or derivatives thereof include one or more of default hydraulic pressures, maximum hydraulic pressures, or minimum hydraulic pressures, or one or more of default operating temperatures or pressures, maximum operating temperatures or pressures, or minimum operating temperatures or pressures, or some combination thereof. Again, the operations status information 111a can include similar information to operations status information 111b but with some deficiencies.

In some embodiments, the trained model (e.g., see model 109b) is configured to generate the status information 111b to minimize fuel consumption of the mobile machine 110 when performing a given field operation. Also, in some examples, the trained model is configured to generate the status information 111b to minimize the operation time of the mobile machine 110 when performing a given field operation. Also, in some examples, the trained model is configured to generate the status information 111b to minimize ground or soil compaction caused by the mobile machine 110 when performing a given field operation. Again, the operations status information 111a can include similar information to operations status information 111b but with some deficiencies.

In some examples, the secondary information 114 or the environmental circumstances 112 includes environmental factors occurring during a time period associated with the operations of the mobile machine. In some examples, the environmental factors include at least one of wind speed, wind direction, temperature, humidity, daytime duration, and cloud cover. In some cases, the environmental factors include crop type. As shown, the secondary information 114 is received from some of the sensors 102c and the circumstances 112 is received from the trained model 109b in that it is output 109f of the model.

In some embodiments, the secondary information 114 or the environmental circumstances 112 includes one or more of field crop information, wind direction or speed, ambient temperature, ambient humidity, soil characteristics, time of day, date, and geographic region. In some embodiments, the field crop information includes one or more of crop heights, crop color, crop moisture, crop lodging, and weed information. In some embodiments, the mobile machine is a harvester and the secondary information includes one or more of ground speed, fuel efficiency, crop throughput, crop quality (e.g., crop quality can include the number of kernels of grain that are cracked or broken), crop cleanliness, and crop yield. In some cases, the secondary information 114 or the environmental circumstances 112 includes field information having one or more of field size information, field shape information, field elevation information, field topology information, soil type information, soil condition information, crop type information, crop lodging information, soil compaction information, weed density information, and weed location information. In some embodiments, the field information is recorded field information recorded from one or more fields, or the field information is predetermined or preselected field information from known field attributes, or some combination thereof.

In some embodiments, the secondary information 114 or the environmental circumstances 112 includes weather data, ambient condition data, time of year data, geographic region data, or any combination thereof. In some cases, the secondary information 114 or the environmental circumstances 112 includes weather data that includes one or more of datasets collected from one or more of thermometers, barometers, radar, wind vanes, anemometers, transmissometers, hygrometers, etc. The datasets can include measured temperature, air pressure, rain or snow locations, wind direction, wind speed, atmospheric visibility, humidity, etc. In some cases, the weather data includes one or more datasets collected from one or more satellites, radiosondes, etc. Also, in some examples, with the addition of satellite or drone images (such as for use by NDVI) being part of the secondary information 114, a prediction of the crop state can be made (such as by part of the model 108), which can assist in narrowing the type of field operation or the status of it. For example, if the NDVI can show that there is no vegetation in a field, then it may be concluded that the operation is not spraying operation.

The secondary information 114 or the environmental circumstances 112 can be used as input for the user interface 102d (e.g., see input 109g). Not shown entirely, the secondary information 114 or the environmental circumstances 112 can be used as input for training the model as well.

The secondary information 114 as well as any other information used as input for the model 108 that comes from complex data sources such as images can be derived in part from feature extractions. Feature extractions can include extracting relevant features from the information containing environmental factors, machine operating conditions, machine statuses and machine parts statuses, the machine settings, or recorded results of operations. And, the model or type of model to be used can be determined based on or prior to the feature extractions. The model selection can include choosing a suitable machine learning model or deep learning model, such as a deep learning model for sequence-based data, such as recurrent neural networks (RNNs), long short-term memory (LSTM) networks, or transformer-based models. Such models are capable of capturing temporal dependencies and learning complex patterns in the data. In some embodiments, the trained model 109b includes at least one of RNNs, LSTM networks, or transformer-based models. In some embodiments, the training 109a or the training that occurs at step 1214 (as shown in FIGS. 12 to 15), such as the training based at least partially on the secondary information, is according to preprocessed data that includes the extracted features from the feature extraction as input sequences.

The model evaluation or selection can be a part of any one of the methods described herein. The selection of a model would occur prior to use of the model 108. In some examples, the evaluation can include the evaluation of the trained model's performance on a dataset to ensure its generalization is valid to unseen data (e.g., evaluating the trained model 109b). The evaluation can use metrics, such as mean absolute error, root mean squared error, or custom metrics relevant to the specific application. The methods described herein can include model deployment. The deployment can include integrating the trained model into the mobile machine's UI systems. For example, the deployment can include integrating the trained model into the mobile machine's UI systems to provide real-time updates and enhancements to the information provided via the UI systems such as for planning and optimization of machine operations and settings.

In some embodiments, the model 108 can benefit from continuous improvement such as regularly updating the model with new data to ensure its performance remains accurate and up-to-date. For example, any of the model inputs described herein can be used for regularly updating the model as can any of the outputs of the model or derivatives thereof be used. Also, improving the model can include monitoring the model's performance and retraining or fine-tuning the model per application of it or as needed accordingly. By implementing deep learning-based machine operations, statuses, and settings determinations, the technologies described herein can assist in the planning and control of mobile machines. With such technologies, it is possible to use machine learning to (1) plan future operations, (2) control mobile machines, (3) adjust the settings of mobile machines in real time, and (3) generate, update, enhance, or schedule settings or operations in general. And, the aforesaid features can be implemented for various factors, such as operational time efficiency, fuel efficiency, reduced soil compaction, and machine capabilities. This can lead to improved productivity, cost savings, and better overall sustainability of operations.

Alternatively, a less costly or less computing resource intensive approach can be used to generate or update the model 108. And, such an approach can reduce the use of resources by not using machine learning or deep learning processes. In some examples, the technologies described herein can leverage another type of model for model 108 that is not trained via machine learning or deep learning, such as a predetermined and static rules-based model for tracking mobile machine operational statuses at intervals of time of a time period. Furthermore, in some examples, the technologies described herein can use a model that is trained or frequently updated by a computing technique or other type of technique other than machine learning or deep learning, such as a dynamic rules-based model for tracking mobile machine operational statuses at intervals of time of a time period.

FIG. 2 illustrates a block diagram of example aspects of a computing system 200 that can implement the technical solution shown in FIG. 1 or each computing part of the solution (e.g., see computing systems 102 and 102a). Also, FIG. 2 illustrates parts of the computing system 200 within which a set of instructions are executed for causing a machine (such as a computer processor or processing device 202) to perform any one or more of the methodologies discussed herein performed by a computing system (e.g., see the method steps of the methods 300, 400, 500, 600, 700, 800, 1200, 1300, 1400, 1500, and 1600 shown in respective figures). In some embodiments, the computing system 200 operates with additional computing systems to provide increased computing capacity in which multiple computing systems operate together to perform any one or more of the methodologies discussed herein that are performed by a computing system (e.g., also see the computing system 102 that is connected and interoperable with the remote computing system 102a to provide increased computing capacity).

In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in a client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 220. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application-specific integrated circuit (ASIC), a field programmable gate array (FPGA), a digital signal processor (DSP), a network processor, or the like. The processing device 202 is configured to execute instructions 214 for performing the operations discussed herein performed by a computing system. In some embodiments, the computing system 200 includes a network interface device 208 (e.g., see network interface 102b) to communicate over a communications network (e.g., see communications network 101). Such a communications network can include one or more local area networks (LAN(s)) and/or one or more wide area networks (WAN(s)). In some embodiments, the communications network includes the Internet and/or any other type of interconnected communications network. The communications network can also include a single computer network or a telecommunications network.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media. While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that causes the machine to perform any one or more of the methodologies of the present disclosure performed by a computing system. The term "machine-readable storage medium" shall accordingly be taken to include solid-state memories, optical media, or magnetic media.

Also, as shown, the computing system 200 includes user interface or UI 216 that includes a display, in some embodiments, and, for example, implements functionality corresponding to any one of the UI devices disclosed herein (such as user interface 102d shown in FIG. 1). A UI, such as UI 216, or a UI device described herein includes any space or equipment where interactions between humans and machines occur. A UI described herein allows operation and control of the machine from a human user, while the machine simultaneously provides feedback information to the user. Examples of a user interface, or UI device include the interactive aspects of computer operating systems (such as GUIs), machinery operator controls, and process controls.

Also, as shown, the computing system 200 includes hardware interface 218 that includes sensor interfaces to interface sensors to the computing system (e.g., see sensors 102c) and controller interfaces to interface controllers to the computing system. The interfaces 218 can implement at least some of the functionality corresponding to the respective hardware devices that they interface with. The interfaces 218 can provide the connections for the communications between the computing system 200 and any one of the electronics described herein such as any of the controllers described herein or sensors described herein, e.g., see sensor system used in method 1200 which includes one or more sensors.

FIGS. 3 to 8 and 12 to 16 illustrate methods in accordance with some embodiments of the present disclosure. More specifically, FIGS. 3 to 8 and 12 to 16 illustrate methods 300, 400, 500, 600, 700, 800, 1200, 1300, 1400, 1500, and 1600. These methods have steps that require computing and such steps can be enabled or performed by any one of the computing systems described herein (e.g., see computing system 102, 102a, or 200 depicted in FIGS. 1 and 2 respectively). In some systems of the technologies disclosed herein, any steps of embodiments of the methods described herein are implementable by executing instructions corresponding to the steps, which are stored in memory (such as the instructions 214).

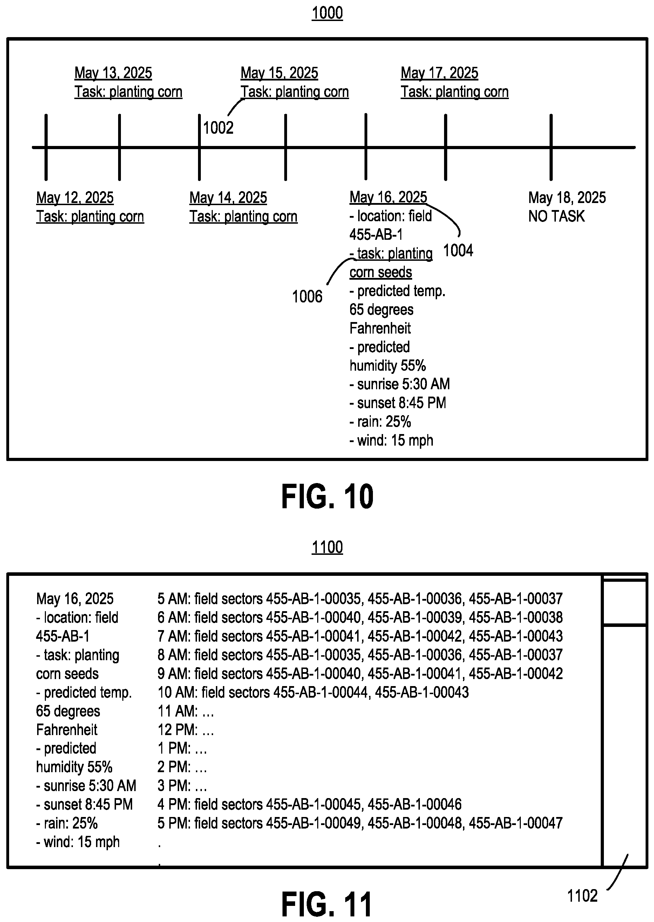

As shown in FIG. 3, method 300 begins with step 302, which includes receiving, by a computing system (e.g., see computing systems 102 and 200 shown in FIG. 1 and 2 respectively), machine operational status information (e.g., see information 111a or 111b) of a mobile machine (e.g., see mobile machine 110) that has moved through an area of land during a time period. The received machine operational status information includes respective operational statuses of the mobile machine at each interval of intervals of time within the time period. The mobile machine can include an implement used for farming, construction, or forestry. As shown, method 300 continues with generating, by the computing system, a GUI (e.g., see user interface 102d) according to the received machine operational status information. In some cases, the GUI includes a calendar view (e.g., see calendar view 900 shown in FIG. 9), a chronological bar view (e.g., see bar view 1000 shown in FIG. 10), a list view (e.g., see lest view 1100 shown in FIG. 11) of the machine operational statuses or the machine operational status information. In some examples, the operational status at each interval of time of the time period includes a location of the mobile machine in the area of land at the interval of time.

As shown in FIG. 4, method 400 begins with step 402, which includes receiving, by a computing system (e.g., see computing systems 102 and 200 shown in FIG. 1 and 2 respectively), machine operational status information (e.g., see information 111a or 111b) of a mobile machine (e.g., see mobile machine 110) that has moved through an area of land during a time period. The received machine operational status information includes respective operational statuses of the mobile machine at some intervals of intervals of time within the time period, and the mobile machine can include an implement used for farming, construction, or forestry. At step 404, the method 400 continues with using, by the computing system, a model (e.g., see model 108) to determine an operational status (e.g., see status 111b) of the mobile machine at each interval of the intervals of time within the time period based on the received machine operational status information (e.g., see status 111a). At step 404, the method 400 continues with generating, by the computing system, a GUI (e.g., see user interface 102d) according to the determined machine operational statuses (e.g., see status 111b). In some cases, the GUI includes a calendar view (e.g., see calendar view 900 shown in FIG. 9), a chronological bar view (e.g., see bar view 1000 shown in FIG. 10), a list view (e.g., see list view 1100 shown in FIG. 11) of the machine operational statuses or the machine operational status information.

In some embodiments, graphical representations of the dates within the calendar view (e.g., see calendar view 900), the chronological bar view (e.g., see bar view 1000), and a list view (e.g., see list view 1100) are expandable (e.g., see expandable date 902 or 1002) to show the respective determined operational statuses and collapsible (e.g., see collapsible date 904 or 1004) to hide the determined statuses. The graphical representations of other information parts within the view can also be expandable and collapsible depending on the embodiment of the GUI (e.g., see the expandable task item 906 or 1006). When the other information parts are expandable the expansion can reveal additional details specific to the other information parts. For example, when the expandable task item 906 (depicted in FIG. 9) or the expandable task item 1006 (depicted in FIG. 10) is expanded, additional information related to the corresponding task is revealed that can include specific instructions on performing the task.

As shown in FIG. 5, method 500 includes steps from method 400, including steps 402, 404, and 406, and the method 500 begins with step 402 (which is the receiving of the status information with some of the intervals included). Method 500 also includes, at step 502, training, by the computing system, the model (e.g., see model 108) using the received machine operational status information (e.g., see status information 111a and 111b). The method 500 also includes using, by the computing system, the trained model (e.g., see trained model 109b) to determine an operational status (e.g., see status 111b) of the mobile machine at each interval of the intervals of time within the time period.

As shown in FIG. 6, method 600 includes steps from method 300, including steps 302 and 304, and the method 600 begins with step 302 (which is the receiving of the status information with all of the intervals included in the given time period). The method 600 also includes receiving, by the computing system, secondary information (e.g., see secondary information 114) from the time period (at step 602). And, the method 600 includes generating, by the computing system, a GUI according to the operational status information and the secondary information (at step 604).

As shown in FIG. 7, the method 700 includes steps from method 400. For example, method 700 starts with receiving, by a computing system, machine operational status information of a mobile machine that has moved through an area of land during a time period (at step 402). The machine operational status information includes respective operational statuses of the mobile machine at some intervals of intervals of time within the time period. The method 700 continues with receiving, by the computing system, secondary information (e.g., see secondary information 114) from the time period (at step 702). Further, the method 700 continues with using, by the computing system, a model (e.g., see model 108) to determine an operational status of the machine at each interval of the intervals of time within the time period based on the status information and the secondary information (at step 704). And, the method 700 includes generating, by the computing system, a GUI (e.g., see GUI 102d) according to the determined operational statuses and the secondary information.

As shown in FIG. 8, the method 800 includes steps from method 400 and 700. The method 800 commences with receiving, by a computing system, machine operational status information of a mobile machine that has moved through an area of land during a time period (at step 402). The machine operational status information includes respective operational statuses of the mobile machine at some intervals of intervals of time within the time period. The method 800 also includes receiving, by the computing system, secondary information (e.g., see secondary information 114) from the time period (at step 702). The method 800 also includes, at step 802, training, by the computing system, a model (e.g., see model 108) using the machine operational status information and the secondary information. The method 800 also includes, at step 804, using, by the computing system, the trained model (e.g., see trained model 109b) to determine various environmental circumstances associated with the area of land at each interval of time within the time period. And, the method also includes, at step 806, using, by the system, the trained model to determine an operational status of the machine at each interval of the intervals of time within the time period based on the status information and the secondary information. Furthermore, at step 808, the method 800 includes generating, by the computing system, a GUI (e.g., see user interface 102d) according to the determined operational statuses and various environmental circumstances.

FIGS. 9 to 11 illustrate examples views 900, 1000, and 1000 of an example GUI, in accordance with some embodiments of the present disclosure. The views can be used to document the work for regulatory purposes, to show customers what transpired and to use for overviews by an operator during planning of future operations. For example, farmers can evaluate the season after harvest. What went well and what can be improved for next season. Referring to FIG. 9 as an example, a farmer can check the overview of documented tasks, via a calendar view 900, to see what happened during the season or to plan or be instructed on operations in the future. Referring to FIG. 10 as an example, farmers, via the bar view 1000, can quickly or seamlessly see things such as weather conditions for a selected time period. And, any anomalies in work can be highlighted. Referring to FIG. 11 as an example, a farmer can review, via list view 1100, a summary of yield for each field or see specific instructions on a spray plan depending on the season, and the total hours spent working or that need to be worked and be provided with specific times, dates, or selected time intervals. Such views of the GUI are beneficial in that a farmer or another type of operator of mobile machines can more easily document and review the work done or work to be done. Also, an operator can use such summarization for multiple time periods (such as for previous years) for more efficient planning of the next season or project. As shown, the list view 1100 can include an extensive amount of information for the operator to review, and navigating the information can be aided with a scrollbar 1102.

FIGS. 12 to 16 illustrate methods in accordance with some embodiments of the present disclosure. Methods 1200, 1300, 1400, 1500, and 1600 of the corresponding figures are performed by any one of the computing systems described herein (e.g., see computing system 102, 102a, or 200 depicted in FIGS. 1 and 2 respectively). In some systems of the technologies disclosed herein, any steps of embodiments of the methods described herein are implementable by executing instructions corresponding to the steps, which are stored in memory (such as the instructions 214). And, steps of the methods 1200, 1300, 1400, 1500, and 1600 are combinable with each other or with steps of the methods 300, 400, 500, 600, 700, and 800, where it makes sense.

As shown in FIG. 12, method 1200 begins with step 1202, which includes generating, by a sensor system of a mobile machine (e.g., see sensors 102c and mobile machine 110 shown in FIG. 1), mobile machine location information (e.g., see location information 104). The mobile machine location information includes a series of time-stamped locations of the mobile machine as it moves through an area of land during a time period. In some examples, the mobile machine includes an implement used for farming, construction, or forestry. At step 1204, the method 1200 continues with sending to a computing system (e.g., see computing system 102 or 200), by the sensor system, and mobile machine location information. At step 1206, the method 1200 continues with receiving from the sensor system, by the computing system, the mobile machine location information. The communications of steps 1204 and 1206 as well as any of the other communications described herein can occur via local or remote hardware interfaces (e.g., see network interface 102b, network interface device 208, and hardware interfaces 218).

Also, at step 1208, the method 1200 includes generating, by one or more operations tracking modules of the mobile machine (e.g., see sensors 102c and mobile machine 110 shown in FIG. 1), machine operation signals (e.g., see machine operation information 106). The machine operation signals include machine operations data related to operations of the mobile machine during the time period. At step 1210, the method 1200 continues with sending to the computing system, by the operations tracking module(s), the machine operation signals. At step 1212, the method 1200 continues with receiving from the operations tracking module(s), by the computing system, the machine operation signals. The communications of steps 1210 and 1212 as well as any of the other communications described herein can occur via local or remote hardware interfaces (e.g., see network interface 102b, network interface device 208, and hardware interfaces 218).

In some embodiments, the machine operations data includes engine load data. In some examples, the machine operations data includes oil pressure or temperature data. In some cases, the machine operations data includes torque data of a part of the mobile machine. And, in some embodiments, the machine operations data includes speed data.

At step 1214, the method 1200 continues with training, by the computing system, a model using the series of time-stamped locations and the machine operations data (e.g., also see the model 108, the training 109a, and the trained model 109b). And, at step 1216, the method 1200 continues with using, by the computing system, the trained model to determine an operational status of the mobile machine at each interval of intervals of time within the time period (e.g., see operational status information 111b). In some cases, the determined operational status includes a type of field operation performed by the mobile machine.

In some embodiments, each time-stamped location of the series of time-stamped locations includes a time stamp and a geographic location within the area of land. For example, the geographic location includes at least one of a latitude and longitude coordinate, an altitude, a distance, and a direction from a selected location, or a location name or code. In some embodiments, each time-stamped location of the series of time-stamped locations includes accuracy information related to the geographic location. In some examples, each time-stamped location of the series of time-stamped locations includes a corresponding date.

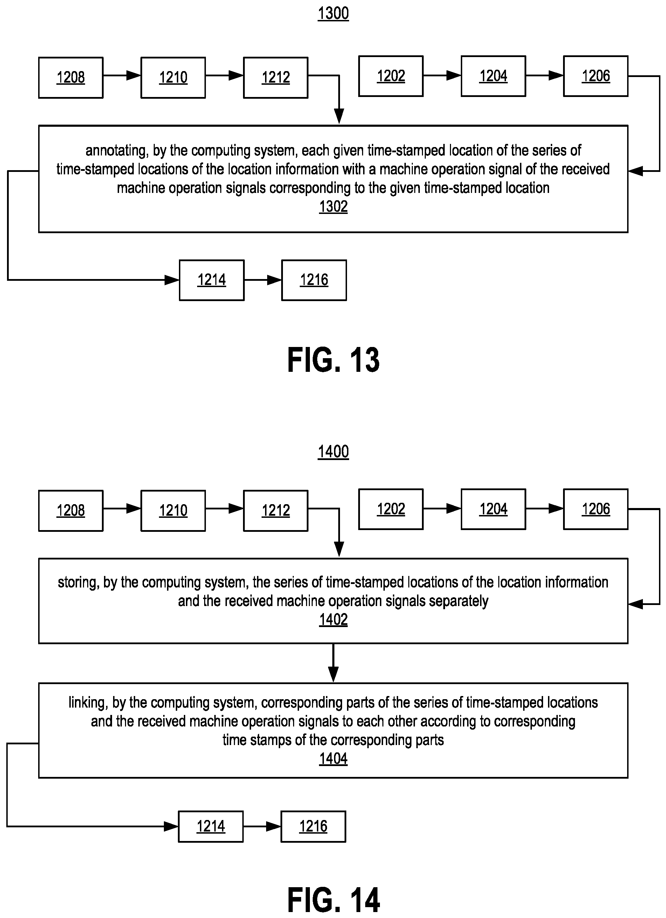

As shown in FIG. 13, method 1300 includes all the steps of method 1200 and subsequent to step 1212, which include receiving the machine operation signals, and step 1206, which includes receiving the mobile machine location information, the method 1300 includes, at step 1302, annotating, by the computing system, each given time-stamped location of the series of time-stamped locations of the location information with a machine operation signal of the received machine operation signals corresponding to the given time-stamped location. Then, at step 1214, the method includes the training of the model using the series of time-stamped locations and the machine operations data occurs, wherein each given time-stamped location of the series of time-stamped locations is annotated with a machine operation signal of the received machine operation signals corresponding to the given time-stamped location.

As shown in FIG. 14, method 1400 includes all the steps of method 1200 and subsequent to step 1212, which include receiving the machine operation signals, and step 1206, which includes receiving the mobile machine location information, the method 1400 includes, at step 1402, storing, by the computing system, the series of time-stamped locations of the location information and the received machine operation signals separately. Then, at step 1404, the method includes linking, by the computing system, corresponding parts of the series of time-stamped locations and the received machine operation signals to each other according to corresponding time stamps of the corresponding parts of the series of time-stamped locations and the received machine operation signals. Afterward, at step 1214, the method includes the training of the model using the series of time-stamped locations and the machine operations data occurs, wherein the series of time-stamped locations and the received machine operation signals are stored separately. And, wherein corresponding parts of the series of time-stamped locations and the received machine operation signals are linked to each other according to corresponding time stamps of the respective parts.

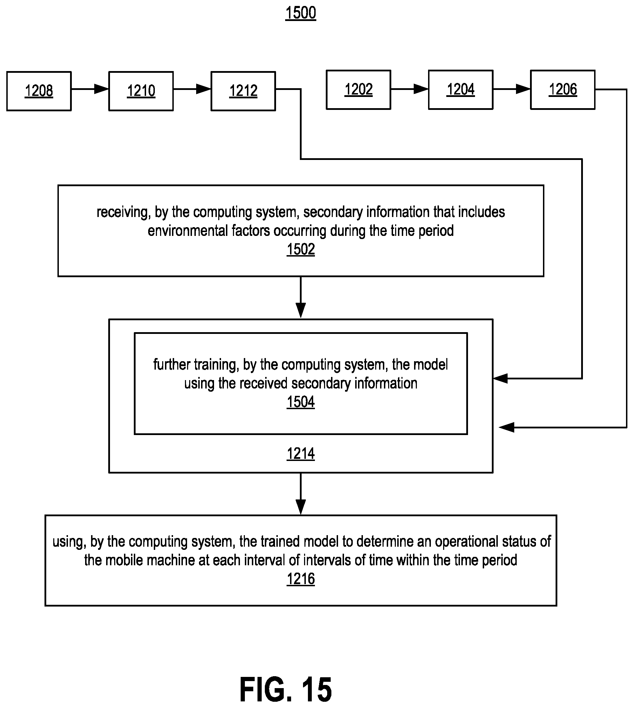

As shown in FIG. 15, method 1500 includes all the steps of method 1200 as well as commencing with, at step 1502, receiving, by the computing system, secondary information, the secondary information includes environmental factors occurring during the time period. The method 1500 also includes further training, by the computing system, the model using the received secondary information, at step 1504 (which is a sub-step of step 1214 of method 1200). Finally, at step 1216, the method includes using, by the computing system, the trained model to determine the operational status of the mobile machine at each interval of intervals of time within the time period (however, at least in part with consideration of the secondary information). The environmental factors of the secondary information can include at least one of wind speed, wind direction, temperature, humidity, daytime duration, and cloud cover.

In some embodiments, the model includes an artificial neural network. Also, in some examples, the model can include deep learning-based determinations of machine operational statuses that can be used for further analysis or for even controlling mobile machines or adjusting settings of mobile machines. By leveraging the power of deep learning, a model can capture complex patterns and dependencies within various data inputs into the model, allowing for more efficient machine status and settings determination, scheduling, and execution, even in real time when the machine is operating. In order to leverage ANNs or deep learning processes some embodiments preprocess the inputs to the model (e.g., including inputs described with respect to methods 1200 to 1500 as well as inputs including location information 104, machine operation information 106, and secondary information 114 shown in FIG. 1).

As shown in FIG. 16, a method 1600 includes, at step 1602, the computing system enhancing the location information, the machine operation signals, the secondary information, or a combination thereof according to digital signal processing or other data pre-processing. At step 1604, the computing system uses the location information, the machine operation signals, the secondary information, a combination thereof, or a derivative thereof as an input to a computing scheme 1607. At step 1606, the computing system specifically determines, by the computing scheme 1607, an operational status of the mobile machine at each interval of intervals of time within the time period 706. And, at step 1608, the computing system uses an output of the scheme or a derivative thereof to determine the status of the mobile machine at each interval of intervals of time within the time period.

Regarding the computing scheme 1607 or any other computing scheme described herein, the scheme, in some examples, includes an ANN. And, in some examples, the ANN is part of a deep learning process that determines the status of the mobile machine or is a basis for the determination of the status (e.g., see step 1608). The deep learning process, in some examples, includes a CNN or includes a network of convolutional neural networks CNNs.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
receiving, by a computing system (102, 200), machine operational status information (111a, 111b) of a mobile machine (110) that has moved through an area of land during a time period (step 402), the received machine operational status information comprising respective operational statuses of the mobile machine at some intervals of intervals of time within the time period, the mobile machine comprising an implement used for farming, construction, or forestry;
using, by the computing system (102, 200), a model (108) to determine an operational status (111b) of the mobile machine (110) at each interval of the intervals of time within the time period based on the received machine operational status information (111a) (step 404); and
generating, by the computing system (102, 200), a graphical user interface (GUI) (102d) according to the determined machine operational statuses (111b) (step 406).

2. The method according to claim 1, wherein the GUI (102d) comprises a chronological view of events (900) of the determined machine operational statuses (111b).

3. The method according to claim 2, wherein graphical representations of the dates within the calendar view are expandable (902) to show the respective determined operational statuses (111b) and collapsible (904) to hide the determined statuses.

4. The method according to any one of the preceding claims, further comprising:
training, by the computing system (102, 200), the model (108) using the received machine operational status information (111a, 111b) (step 502); and
using, by the computing system (102, 200), the trained model (109b) to determine an operational status (111b) of the mobile machine (110) at each interval of the intervals of time within the time period (step 504).

5. The method according to any one of the preceding claims, wherein the determined operational status (111b) at each interval of time of the time period comprises a location of the mobile machine (110) in the area of land at the interval of time.

6. The method according to any one of the preceding claims, further comprising:
receiving, by the computing system (102, 200), secondary information (114) from the time period and associated with the area of land (step 702);
using, by the computing system (102, 200), the model (108) to determine the operational status (111b) of the mobile machine (110) at each interval of the intervals of time within the time period further based on the received secondary information (114) (step 704).

7. The method according to claim 6, wherein the secondary information (114) comprises environmental factors associated with the area of land.

8. The method according to claim 6 or 7, comprising further training, by the computing system (102, 200), the model (108) using the received secondary information (114) (step 802).

9. The method according to claim 8, further comprising using, by the computing system (102, 200), the trained model (109b) to determine various environmental circumstances (112) associated with the area of land at each interval of time within the time period (step 804).

10. The method according to claim 9, further comprising generating, by the computing system (102, 200), an enhanced GUI (102d) according to the determined machine operational statuses (111b) and the various environmental circumstances (112) (step 808).

11. The method according to claim 10, wherein the GUI (102d) comprises a calendar view (900) of the enhanced machine operational statuses (111b) and the various environmental circumstances (112).

12. The method according to any one of the claims 6 to 11, wherein the secondary information (114) is derived from satellite image data.

13. The method of any one of the preceding claims, further comprising:
receiving, by the computing system (102, 200), mobile machine location information (104), the mobile machine location information comprising a series of time-stamped locations of a mobile machine (110) as it moves through the area of land during the time period (step 1206);
further training, by the computing system (102, 200), the model (108) using the series of time-stamped locations (104) (step 1214); and
using, by the computing system (102, 200), the further trained model (109b) to determine the operational status (111b) of the mobile machine (110) at each interval of the intervals of time within the time period (step 1216).

14. The method according to claim 13,
receiving, by the computing system (102, 200), machine operation signals (106), the machine operation signals comprising machine operations data related to operations of the mobile machine (110) during the time period (step 1212);
even further training, by the computing system (102, 200), the model (108) using the received machine operation signals (106) (step 1214); and
using, by the computing system (102, 200), the even further trained model (109b) to determine the operational status (111b) of the mobile machine (110) at each interval of the intervals of time within the time period (step 1216).

15. The method according to claim 13 or 14, wherein each time-stamped location of the series of time-stamped locations (104) comprises a time stamp and a geographic location within the area of land.

16. A method, comprising:
receiving, by a computing system (102, 200), machine operational status information (111a, 111b) of a mobile machine (110) that has moved through an area of land during a time period (step 302), the received machine operational status information comprising respective operational statuses of the mobile machine at each interval of intervals of time within the time period, the mobile machine comprising an implement used for farming, construction, or forestry;
and generating, by the computing system (102, 200), a graphical user interface (GUI) (102d) according to the received machine operational status information (111a, 111b) (step 304), the GUI comprising a calendar view (900) of the machine operational statuses.

17. The method according to claim 16, wherein the operational status at each interval of time of the time period comprises a location of the mobile machine (110) in the area of land at the interval of time.

18. The method according to claim 16 or 17, further comprising:
receiving, by the computing system (102, 200), secondary information (114) from the time period and associated with the area of land (step 602); and
further generating, by the computing system (102, 200), the GUI (102d) using the received secondary information (114) (step 604), and
wherein the operational status at each interval of time of the time period comprises a part of the secondary information (114) associated with the location of the mobile machine (110) in the area of land at the interval of time.

19. A method, comprising:
receiving, by a computing system (102, 200), machine operational status information (111a, 111b) of a mobile farming machine that has moved through an area of land during a time period (step 302), the received machine operational status information comprising respective operational statuses of the mobile machine (110) at each interval of intervals of time within the time period;
and generating, by the computing system (102, 200), a graphical user interface (GUI) (102d) according to the received machine operational status information (111a, 111b) (step 304), the GUI comprising a calendar view (900) of the machine operational statuses.

20. The method according to claim 19, wherein the operational status at each interval of time of the time period comprises a location of the mobile machine (110) in the area of land at the interval of time.
